# EUROPÄISCHE PATENTSCHRIFT

(11) **EP 2 145 373 B1**
(45) Veröffentlichungstag und Bekanntmachung des Hinweises auf die Patenterteilung: **06.07.2016**
(21) Anmeldenummer: 08717704.4
(22) Anmeldetag: 12.03.2008
(51) Int. Cl.: H02J 7/00

(54) **VORRICHTUNG UND SYSTEM ZUR BATTERIEERKENNUNG**
DEVICE AND SYSTEM FOR BATTERY RECOGNITION
DISPOSITIF ET SYSTÈME DE RECONNAISSANCE DE BATTERIE

(30) Priorität: 13.04.2007 DE 102007017407
(43) Veröffentlichungstag der Anmeldung: 20.01.2010
(73) Patentinhaber: Industrie Automation Energiesysteme AG, 79232 March/ Freiburg (DE)
(72) Erfinder: KEGEL, Heinz Josef, 64653 Lorsch (DE); GAUS, Harry, 69151 Neckargemünd (DE)
(74) Vertreter: Cohausz & Florack
(86) Internationale Anmeldenummer: PCT/EP2008/052958
(87) Internationale Veröffentlichungsnummer: WO 2008/125405

(56) Entgegenhaltungen:
- WO-A-2004/047215
- US-A1- 2002 086 718
- US-A1- 2004 196 006
- US-A1- 2006 006 876

## Beschreibung

### EINLEITUNG

Die vorliegende Erfindung betrifft Vorrichtungen und ein System zum Erkennen einer Batterie für Flurförderzeuge.

### STAND DER TECHNIK

Flurförderzeuge werden oftmals mit einem Elektroantrieb versehen, welcher von einer aufladbaren Batterie mit Energie versorgt wird. Ferner werden Flurförderzeuge vielmals in einem großen Fuhrpark eingesetzt, wobei eine Vielzahl von aufladbaren Batterien für die verschiedenen Flurförderzeuge vorgesehen sein können. Hierbei können z.B. auch unterschiedliche Batterietypen zum Einsatz kommen.

Der Service dieser Vielzahl von aufladbaren Batterien, wie z.B. eine auf den jeweiligen Batterietyp angepasste Ladung, erfordert einen hohen logistischen Aufwand, da z.B. für das Aufladen einer Batterie das Ladegerät genau auf diese Batterie bzw. den speziellen Batterietyp einzustellen ist. Wird eine solche Einstellung per Hand vorgenommen, so bedeutet dies einen hohen Arbeitsaufwand und weist zudem die Gefahr von Fehlern auf.

Die Druckschrift US 2004/196006 A1 offenbart ein elektronisches Gerät mit einer Daten- Schreib-/Leseeinheit, welche Information über eine Batterie ausliest, wobei die Information in einem in der Batterie befindlichen drahtlosen Etikett gespeichert ist. Die Schreib-/Leseeinheit ist mit einer CPU verbunden. Die Information kann die Art der Batterie, den Batteriehersteller und die Batteriekapazität umfassen. Des Weiteren werden auf dem drahtlosen Etikett die Anzahl der Ladezyklen der Batterie gespeichert.

Aus der US 2006/0006876 A1 ist einen elektronischer Batterietester bekannt, welcher durch den Testvorgang generierte Testdaten ermittelt und über eine Funkschnittstelle an einen Empfänger übermittelt.

Die US 2002/0086718 A1 offenbart eine Vorrichtung zur Überwachung von Batteriezuständen von Batterien, welche in Mobilfunkgeräten eines Mobilfunksystems eingesetzt werden. Jedes Mobilfunkgerät umfasst Mittel zur Bestimmung von den Batteriezustand beschreibenden Parametern und Mittel zum Übertragen dieser Parameter über eine Funkschnittstelle, wobei gleichzeitig ein Batterieidentifikator übertragen wird. Das Mobilfunksystem umfasst Mittel zum Empfang der Parameter und der Batterieidentifikatoren der verschiedenen Mobilfunkgeräte und Mittel zum Speichern der empfangenen Paramter und Batterieidentifikatoren.

Aus der WO 2004/047215 A ist ein System zum automatischen Management von Batterien bekannt, wobei jede Batterie mindestens eine Zelle umfasst. Das System umfasst mindestens eine Zelleneinheit zum Messen von physikalischen Parametern mindestens einer Batteriezelle, eine Steuereinheit und einen Sender zum Übertragen der gemessenen Werte zu der Steuereinheit über eine erste drahtlose Kommunikationsschnittstelle. Die Steuereinheit kann auch über eine zweite drahtlose Kommunikationsschnittstelle Signale an die Zelleneinheit senden.

### BESCHREIBUNG DER ERFINDUNG

Der Erfindung liegt davon ausgehend die Aufgabe zugrunde, eine Vorrichtung bzw. ein System zu schaffen, welches in der Lage ist, eine Batterie eindeutig zu erkennen, so dass die Batterie z.B. von einem Ladegerät oder einem Flurförderzeug, welches mit der Batterie verbunden ist, eindeutig identifiziert werden kann.

Diese Aufgabe wird gelöst durch eine Vorrichtung, welche einer aufladbaren Batterie für Flurförderzeuge räumlich nah zugeordnet ist, wobei die Vorrichtung Speichermittel, in denen ein der Batterie zugeordneter Identifikator gespeichert ist, umfasst, und eine mit den Speichermitteln zusammenwirkende Funkschnittstelle umfasst, wobei die Funkschnittstelle zur bidirektionalen Datenübertragung zwischen den Speichermitteln und einer externen Kommunikationsvorrichtung eingerichtet ist, wobei die Vorrichtung dazu eingerichtet ist, weitere Daten über die Funkschnittstelle zu empfangen und diese in den Speichermitteln einzuspeichern, und wobei diese weiteren Daten nicht batteriebezogene Postfachinformationen umfassen, wobei die Vorrichtung in einem Codierstift eines Steckers eines Ladekabels der zugehörigen Batterie platziert ist.

Beispielsweise kann die Batterie an eine mit einer Batterie für Flurförderzeuge verbindbare Vorrichtung, wie z.B. ein Ladegerät für Flurförderzeugbatterien oder ein mit der Batterie zu betreibendes Flurförderzeug, anschliessbar sein, wobei sich an der verbindbaren Vorrichtung die externe Kommunikationsvorrichtung befinden kann.

Durch die räumlich nahe Zuordnung der erfindungsgemäßen Vorrichtung zu der Batterie befindet sich die Vorrichtung in einer nahen Distanz zu einer mit einer Batterie für Flurförderzeuge verbindbaren Vorrichtung und somit auch in einer nahen Distanz zu der externen Kommunikationsvorrichtung, wenn z.B. die Batterie an diese verbindbare Vorrichtung angeschlossen ist und sich die externe Kommunikationsvorrichtung selbst in einer nahen Distanz zur dieser verbindbaren Vorrichtung befindet. Dies weist den Vorteil auf, dass aufgrund der geringen Distanz auch mit geringer Sendeleistung eine zuverlässige Funkverbindung zwischen der Vorrichtung und der externen Kommunikationsvorrichtung durchgeführt werden kann. Die räumliche nahe Zuordnung kann z.B. bedeuten, dass die Vorrichtung z.B. in der Nähe der Batterie platziert ist, oder z.B. an der Batterie angebracht ist.

Über die Funkschnittstelle der Vorrichtung kann der in den Speichermitteln gespeicherte Identifikator von der Vorrichtung ausgesendet werden und von der externen Kommunikationsvorrichtung empfangen werden. Somit kann die Batterie durch den ausgesendeten Identifikator z.B. von einem Flurförderzeug oder einem Ladegerät eindeutig identifiziert werden, wenn diese die externe Kommunikationsvorrichtung umfassen oder mit derselben verbunden sind.

Ferner kann die Vorrichtung auch dazu eingerichtet sein, neben dem Identifikator auch weitere in den Speichermitteln gespeicherte Daten über die Funkschnittstelle zu senden, so dass diese gesendeten Daten z.B. von der externen Kommunikationsvorrichtung empfangen werden können.

Des Weiteren ist die Vorrichtung dazu eingerichtet, von der externen Kommunikationsvorrichtung Daten über die Funkschnittstelle zu empfangen und beispielsweise in den Speichermitteln zu speichern.

Die Funkschnittstelle kann Signalverarbeitungsmittel und eine Antenne aufweisen, so dass in den Speichermitteln gespeicherte Daten, wie z.B. der Identifikator oder auch andere Daten, unter Verwendung von den Signalverarbeitungsmitteln moduliert und über die Antenne ausgesendet werden können. Die Funkschnittstelle kann z.B. auf RFID Technologie basieren, wobei die Antenne ein RFID Signal aussendet. Dieses Signal kann z.B. eine Trägerfrequenz von 125kHz aufweisen, kann aber auch eine andere RFID-typische Trägerfrequenz aufweisen. Die Antenne ist auf die jeweilige Frequenz abgestimmt.

Ferner ist die Funkschnittstelle auch zum Datenempfang eingerichtet sein, in dem z.B. Funksignale über die Antenne empfangen werden und unter Verwendung von den Signalverarbeitungsmittteln demoduliert werden. Diese empfangenen Daten können dann z.B. in den Speichermitteln gespeichert werden.

Die Vorrichtung kann beispielsweise eine eigene Energieversorgung, z.B. eine Batterie, aufweisen, sie kann aber auch mit externer Energie versorgt werden.

Die erfindungsgemäße Erfindung weist den Vorteil auf, dass auf eine einfache Art und Weise eine Batterie von einer an die Batterie angeschlossene Vorrichtung erkannt werden kann, wenn diese angeschlossene Vorrichtung eine Kommunikationsvorrichtung zum Empfangen des ausgesendeten Identifikators aufweist oder mit derselben verbunden ist. Somit kann z.B. ein Ladegerät die Batterie eindeutig identifizieren, wenn die Batterie zum Aufladen an das Ladegerät angeschlossen wird. Hierdurch kann z.B. der Ladeprozess auf Basis der Batterieidentifikation optimiert werden.

Der Identifikator kann z.B. eine Identifizierungsnummer sein, z.B. eine 32 Bit lange Identifizierungsnummer. Dieser Identifikator kann derart in den Speichermitteln gespeichert sein, dass sich dieser nicht mehr ändern lässt, wodurch Manipulationen vermieden werden können.

Des Weiteren können die Speichermittel derart ausgebildet sein, dass diese den Speicherinhalt auch bei abgeschalteter Energieversorgung weiter speichern, d.h. die Speichermittel können durch einen nicht-flüchtigen Speicher realisiert sein. Die Speichermittel können z.B. einen 32 Bit-Speicher für den Identifikator aufweisen, und z.B. ferner einen 248 Byte großen Speicher zum Speichern und Auslesen von weiteren Daten. Es können jedoch auch, je nach Bedarf, andere Speicher mit niedrigerer bzw. höherer Speicherkapazität verwendet werden.

Eine Ausgestaltung der Erfindung sieht vor, dass die Funkschnittstelle ferner zur Energieversorgung der Vorrichtung basierend auf induktiver Energieübertragung von der externen Kommunikationsvorrichtung eingerichtet ist.

Beispielsweise kann die Funkschnittstelle über eine Antenne mit Energie von der externen Kommunikationsvorrichtung versorgt werden, wenn diese ein entsprechendes Funksignal aussendet, und dieses Funksignal einen Strom in die Antenne der Funkschnittstelle induziert. Somit benötigt diese Ausgestaltung der Erfindung keine eigene Energieversorgung, wodurch keine Wartung betreffend das Austauschen und Überwachen von z.B. einer Batterie zur Energieversorgung benötigt wird.

Die Vorrichtung kann z.B. ein passiver RFID-Transponder sein, und die externe Kommunikationsvorrichtung kann eine entsprechende RFID Lese/Schreibvorrichtung darstellen.

Eine Ausgestaltung der Erfindung sieht vor, dass die Vorrichtung an einem Ladekabel der zugeordneten Batterie platziert ist.

Beispielsweise kann die Batterie mit dem Ladekabel an ein Ladegerät angeschlossen werden, welches z.B. die externe Kommunikationsvorrichung oder eine Antenne der externen Kommunikationsvorrichtung aufweist. Durch die Anbringung der Vorrichtung an dem Ladekabel wird somit eine nahe Anordnung der Vorrichtung zu der externen Kommunikationsvorrichtung erzielt, wenn das Ladekabel an das Ladegerät angeschlossen wird, so dass eine gute Funkverbindung zwischen der Vorrichtung und der externen Kommunikationsvorrichtung erzielt werden kann.

Des Weiteren kann die Batterie auch über das Ladekabel beispielsweise an ein die externe Kommunikationsvorrichtung oder eine Antenne der externen Kommunikationsvorrichtung aufweisendes Flurförderzeug angeschlossen werden, z.B. zum Betreiben des Flurförderzeuges. Auch hier wird durch die Anbringung der Vorrichtung an dem Ladekabel eine nahe Anordnung der Vorrichtung zu der externen Kommunikationsvorrichtung erzielt, wenn das Ladekabel an das Flurförderzeug angeschlossen wird.

Eine Ausgestaltung der Erfindung sieht vor, dass die Vorrichtung an oder in einem Stecker eines Ladekabels der zugeordneten Batterie platziert ist.

Z.B. kann die Vorrichtung in dem Gehäuse des Steckers eines Ladekabels, oder außen an dem Gehäuse des Steckers platziert sein, oder in dem Stecker bzw. einer Öffnung des Steckes platziert sein. Durch eine Platzierung in dem Stecker kann z.B. ein sehr guter mechanischer Schutz der Vorrichtung erzielt werden.

Diese Platzierung kann z.B. dann vorteilhaft sein, wenn sich die externe Kommunikationsvorrichtung oder eine Antenne der externen Kommunikationsvorrichtung z.B. ebenfalls in einem Stecker oder in einer Dose befindet, in welchen/welche der Stecker des Ladekabels der zugeordneten Batterie einsteckbar ist, da hier eine sehr kurze Distanz zwischen der erfindungsgemäßen Vorrichtung und der externen Kommunikationsvorrichtung erzielt werden kann, wenn der Stecker des Ladekabels der Batterie mit dem Stecker oder der Dose verbunden ist.

Beispielsweise kann die Batterie mit dem Stecker an einen passenden Stecker eines Ladegerät angeschlossen werden, wobei z.B. an oder in dem Stecker des Ladegeräts die externe Kommunikationsvorrichung oder eine Antenne der externen Kommunikationsvorrichtung platziert ist, oder die Batterie kann mit dem Stecker an einen passenden Stecker eines Flurförderzeug angeschlossen werden, wobei z.B. an oder in dem Stecker des Flurförderzeugs die externe Kommunikationsvorrichung platziert ist.

Erfindungsgemäß ist die Vorrichtung in einem Codierstift des Steckers des Ladekabels platziert.

So weisen z.B. Stecker für Antriebsbatterien für Flurförderzeuge eine Codiereinrichtung auf, die sicherstellt, dass ein Stecker nur einen anderen Stecker eingesteckt werden kann, wenn beide Stecker für die gleiche Betriebsspannung vorgesehen sind. Somit kann verhindert werden, dass z.B. versehentlich eine 24V-Batterie mit dem Stecker des Ladekabels an einen Stecker einer 80V-Spannungsquelle angeschlossen wird.

Diese Codiereinrichtung wird mit einem Codierstift realisiert, welcher in dem der Batterie zugordnetem Stecker implementiert ist. Gemäß der Ausgestaltung der Erfindung wird die Vorrichtung in diesem Codierstift des Steckers platziert, oder der Codierstift wird durch die Vorrichtung ersetzt.

Somit lässt sich die erfindungsgemäße Vorrichtung sehr einfach in dem Stecker des Ladekabels der Batterie platzieren, ohne dass aufwändige Änderungen z.B. am Steckergehäuse notwendig werden, wobei die zuvor erläuterten Vorteile für die Funkverbindung zwischen der Vorrichtung und der externen Kommunikationsvorrichtung gleichermaßen für diese Ausgestaltung der Erfindung gelten.

Eine Ausgestaltung der Erfindung sieht vor, dass die Funkschnittstelle mindestens eine Antenne und Signalverbeitungsmittel umfasst.

Die Antenne kann beispielsweise in mehreren Wicklungen in der Vorrichtung angebracht sein. Die Signalverbeitungsmittel und die Speichermittel können beispielsweise Bestandteil eines integrierten Schaltkreises sein, welcher mit der Antenne verbinden ist. Ferner kann der integrierte Schaltkreis auch eine Steuerlogik zur Steuerung der Signalverarbeitungsmittel und der Speichermittel umfassen. Somit kann die Vorrichtung mit geringem Platzaufwand realisiert werden, und eignet sich z.B. gut zur Platzierung in einem Stecker.

Der integrierte Schaltkreis und die Antenne können z.B. einen passiven RFID-Transponder bilden, d.h. die Energie zum Betreiben der integrierten Schaltung kann von der Antenne über induktive Energieübertragung von einer anderen Kommunikationsvorrichtung, welche Funksignale and die Antenne sendet, aus den empfangenen Funksignalen gewonnen werden.

Eine Ausgestaltung der Erfindung sieht vor, dass in den Speichermitteln Batterienenndaten einspeicherbar sind, und diese Batterienenndaten mindestens eine Information aus den folgenden Informationen umfassen: Nennspannung, Nennkapazität, Plattenzahl, Hersteller und Baujahr.

Es können auch noch weitere Nenndaten über die Batterie in der Speichermitteln eingespeichert werden. Diese Nenndaten können z.B. über die Funkschnittstelle in die Speichermittel eingespeichert werden.

Über die Funkschnittstelle können diese Nenndaten dann zu einer externen Kommunikationsvorrichtung ausgesendet werden. Ist diese externe Kommunikationsvorrichtung z.B. einem Ladegerät zugeordnet und werden die empfangenen Daten dem Ladegerät zugeführt, so kann dieser die Batterienenndaten z.B. für einen optimierten Ladeprozess verwenden.

Eine Ausgestaltung der Erfindung sieht vor, dass in den Speichermitteln weitere Daten einspeicherbar sind, und diese weiteren Daten mindestens eine Information aus den folgenden Informationen umfassen: Serviceinformationen, Ladeinformationen und Postfachinformationen.

Die Serviceinformation können z.B. Servicedaten sein, wie z.B. Inspektionsdaten. Die Ladeinformationen können z.B. Informationen über einen oder mehrere Ladevorgänge sein, z.B. ob eine Volladung oder eine Teilladung erfolgt ist, aber auch weitere Informationen bezüglich eines Ladevorgangs. Die Ladeinformation können z.B. von einem Ladegerät mit einer externen Kommunikationsvorrichtung in die Speichermittel eingeschrieben werden und auch wieder ausgelesen werden. Somit kann das Ladegerät z.B. Information über vorangegangen Ladevorgänge dieser Batterie von der Vorrichtung empfangen und diese Informationen z.B. für einen optimierten Ladeprozess verwenden.

Die Postfachinformation können z.B. Informationen sein, die nicht batteriebezogen sind, die allerdings in der Speichermitteln zwischengespeichert werden. So können z.B. die Speichermittel als Postfach für z.B. von einem Flurförderzeug empfangenen Daten verwendet werden, indem z.B. über die Funkschnittstelle Daten von einem Flurförderzeug empfangen werden, während die Batterie mit dem Flurförderzeug verbunden ist, und diese Daten in den Speichermitteln abgespeichert werden. Wird dann die Batterie für einen Ladevorgang an ein Ladegerät angeschlossen, dann können diese vom Flurförderzeug empfangenen und abgespeicherten Daten an das Ladegerät übertragen werden. Somit ermöglicht die Vorrichtung eine Postfachfunktion für die Kommunikation zwischen einem Flurförderzeug und einem Ladegerät. Diese Kommunikation kann auch in umgekehrter Richtung erfolgen, d.h. die Speichermittel können als Postfach für von dem Ladegerät empfangenen Daten, welche an ein Flurförderzeug gesendet werden sollen, verwendet werden.

Eine Ausgestaltung der Erfindung sieht vor, dass die Vorrichtung eine mit den Speichermitteln und der Funkschnittstelle verbundene Steuerlogik umfasst.

Die Steuerlogik kann z.B. dazu verwendet werden, gezielt Daten aus der Speichermitteln auszulesen und/oder gezielt Daten in die Speichermittel zu speichern, und die Steuerlogik kann die Funkschnittstelle ansteuern. Beispielsweise kann die Steuerlogik zusammen mit den Speichermitteln in einem integrierten Schaltkreis implementiert sein.

Eine Ausgestaltung der Erfindung sieht vor, dass die Steuerlogik eingerichtet ist, über die Funkschnittstelle empfangene Daten in den Speichermitteln abzuspeichern.

Eine Ausgestaltung der Erfindung sieht vor, dass die Steuerlogik eingerichtet ist, Daten aus den Speichermitteln auszulesen und über die Funkschnittstelle auszusenden.

Die Vorrichtung kann als eine passive Vorrichtung ausgelegt sein, so dass die Energieversorgung über die Funkschnittstelle basierend auf induktiver Energieübertragung von einer externen Kommunikationsvorrichtung erfolgt, wie z.B. von einer externen Kommunikationsvorrichtung eines Ladegeräts oder eines Flurförderzeugs. Empfängt die Funkschnittstelle Funksignale von einer externen Kommunikationsvorrichtung, so versorgt die Funkschnittstelle die Vorrichtung mit Energie, wobei die Steuerlogik eingeschaltet wird und diese z.B. sämtliche Daten aus den Speichermitteln auslesen kann und über die Funkschnittstelle an die externe Kommunikationsvorrichtung aussenden kann. Die Steuerlogik kann aber auch ausgewählte Daten, welche von der externen Kommunikationsvorrichtung durch ein Funksignal angefordert werden, aus den Speichermitteln auslesen und nur diese ausgewählten Daten über die Funkschnittstelle aussenden.

Eine Ausgestaltung der Erfindung sieht vor, dass die Funkschnittstelle auf RFID-Technologie basiert.

Eine Ausgestaltung der Erfindung sieht vor, dass die Vorrichtung ein RFID-Transponder ist.

Die o.g. Aufgabe wird ferner gelöst durch eine Vorrichtung, welche in einem Stecker für Ladekabel von Batterien für Flurförderzeuge platziert ist, wobei die Vorrichtung Speichermittel umfasst, in denen ein einer Batterie für Flurförderzeuge zugeordneter Identifikator gespeichert ist, und eine mit den Speichermitteln zusammenwirkende Funkschnittstelle umfasst, wobei die Funkschnittstelle zur bidirektionalen Datenübertragung zwischen den Speichermitteln und einer externen Kommunikationsvorrichtung eingerichtet ist.

Für diese erfindungsgemäße Vorrichtung gelten die zuvor genannten Erläuterungen und Vorteile bezüglich der ersten erfindungsgemäßen Vorrichtung, es können beispielsweise auch die zuvor genannten Ausgestaltungen beliebig mit dieser erfindungsgemäßen Vorrichtung kombiniert werden.

So kann mit der in dem Stecker für Ladekabel von Batterien platzierten Vorrichtung sehr einfach eine Kommunikation mit der externen Kommunikationsvorrichtung durchgeführt werden, wenn der Stecker in z.B. über einen Steckes eines Ladegerät oder eines Flurförderzeugs an das Ladegerät oder Flurförderzeug angeschlossen wird, und sich die externe Kommunikationsvorrichuntg in oder an dem Stecker des Ladegeräts oder des Flurförderzeugs befindet. Das Ladekabel kann dann vorzugsweise an der Batterie angeschlossen sein, welcher der Identifikator zugordnet ist.

Eine Ausgestaltung der Erfindung sieht vor, dass sie in einem Codierstift des Steckers platziert ist.

Für diese Ausgestaltung der Erfindung gelten die zuvor genannten Erläuterungen und Vorteile, es können beispielsweise auch alle zuvor genannten Ausgestaltungen beliebig mit dieser Ausgestaltung der Erfindung kombiniert werden.

Die o.g. Aufgabe wird ferner gelöst durch eine Vorrichtung, welche einer mit einer Batterie für Flurförderzeuge verbindbarer Vorrichtung räumlich nah zugeordnet ist, wobei die Vorrichtung eine Prozessoreinheit und eine mit der Prozessoreinheit verbundene Funkschnittstelle umfasst, wobei die Funkschnittstelle zur bidirektionalen Datenübertragung mit einer externen Kommunikationsvorrichtung eingerichtet ist, und wobei diese Datenübertragung das Empfangen eines einer Batterie zugeordneten Identifikators umfasst.

Die mit einer Batterie für Flurförderzeuge verbindbare Vorrichtung kann beispielsweise ein Ladegerät für Battterien für Flurförderzeuge oder ein Flurförderzeug selbst darstellen.

Die räumliche nahe Zuordnung kann z.B. bedeuten, dass die Vorrichtung z.B. in der Nähe der mit einer Batterie für Flurförderzeuge verbindbaren Vorrichtung platziert ist, oder z.B. an der mit einer Batterie für Flurförderzeuge verbindbaren Vorrichtung platziert ist.

Durch die räumlich nahe Zuordnung der erfindungsgemäßen Vorrichtung zu der mit einer Batterie für Flurförderzeuge verbindbaren Vorrichtung kann sich die Vorrichtung und insbesondere die Funkschnittstelle der Vorrichtung in einer nahen Distanz zu der externen Kommunikationsvorrichtung befinden, wenn diese in räumlicher Nähe zu einer Batterie zugordnet ist, und diese Batterie die Vorrichtung angeschlossen ist. Dies weist den Vorteil auf, dass aufgrund der geringen Distanz auch mit geringer Sendeleistung eine zuverlässige Funkverbindung zwischen der Vorrichtung und der externen Kommunikationsvorrichtung durchgeführt werden kann.

Die Vorrichtung kann über die Funkschnittstelle einen von der externen Kommunikationsvorrichtung ausgesendeten Identifikator, welcher die Batterie eindeutig identifiziert, empfangen. Dieser Identifikator kann z.B. über eine Schnittstelle der Vorrichtung an eine Elektronik der mit einer Batterie für Flurförderzeuge verbindbaren Vorrichtung übertragen werden, so dass dort z.B. die angeschlossene Batterie erkannt und eindeutig identifizieren werden kann. Ferner kann die Vorrichtung über die Schnittstelle auch mit Energie von dem Ladegerät versorgt werden.

Ferner kann die Vorrichtung von der externen Kommunikationsvorrichung auch weitere Daten empfangen, und die Kommunikationsvorrichtung kann auch Daten zu der externen Kommunikationsvorrichtung senden, wobei diese gesendeten Daten z.B. in Speichermitteln der externen Kommunikationsvorrichtung gespeichert werden können.

Diese erfindungsgemäße Vorrichtung eignet sich insbesondere zur Kommunikation mit einer der zuvor genannten erfindungsgemäßen Vorrichtungen und allen Ausgestaltungen.

Die Funkschnittstelle kann z.B. auf RFID-Technologie basieren, so dass mit einem RFID-Transponder als externe Kommunikationsvorrichtung kommuniziert werden kann. Ferner kann die Funkschnittstelle derart eingerichtet sein, dass sie die externe Kommunikationsvorrichtung basierend auf induktiver Energieübertragung mit Energie versorgen kann.

Eine Ausgestaltung der Erfindung sieht vor, dass die mit einer Batterie für Flurförderzeuge verbindbare Vorrichtung ein Ladegerät zum Aufladen von Batterien für Flurförderfahrzeuge ist oder ein mit Batterien betreibbares Flurförderfahrzeug ist.

Eine Ausgestaltung der Erfindung sieht vor, dass die Funkschnittstelle Signalverarbeitungsmittel umfasst, und die Vorrichtung eine mit den Signalverarbeitungsmitteln verbundene Antenne aufweist.

Die Antenne kann z.B. in der Vorrichtung integriert sein oder z.B. an einer Aussenseite der Vorrichtung angebracht sein. Die Signalverarbeitungsmittel können z.B. empfangene Funksignale zum Datenempfang demodulieren, fernen können die Signalverarbeitungsmittel auch Daten auf ein auszusendendes Funksignal aufmodulieren, welches über die Antenne zur der externen Kommunikationsvorrichtung gesendet werden kann.

Eine Ausgestaltung der Erfindung sieht vor, dass die Funkschnittstelle Signalverarbeitungsmittel und mindestens einen mit den Signalverarbeitungsmitteln verbundenen Antennenanschluss umfasst.

Für die Signalverarbeitungsmittel gelten die zuvor genannten Erläuterungen. Der Antennenanschluss weist den Vorteil auf, dass eine Antenne frei platzierbar ist. So kann eine Antenne z.B. über ein Antennenkabel an einen des mindestens einen Antennenanschluss angeschlossen werden, wodurch die Antenne an einer besonders günstigen Position in der Nähe einer externen Kommunikationsvorrichtung, mit welcher kommuniziert werden soll, platziert werden kann.

Eine Ausgestaltung der Erfindung sieht vor, dass mindestens eine an den mindestens einen Antennenanschluss angeschlossene Antenne an einem mit einer Batterie verbindbaren Stromkabel der mit einer Batterie für Flurförderzeuge verbindbaren Vorrichtung platziert ist.

Z.B. kann das verbindbare Stromkabel ein Ladekabel eines Ladegeräts sein, wobei z.B. die Vorrichtung dem Ladegerät zugeordnet ist und über die an dem Ladekabel befindliche Antenne mit einer externen Kommunikationsvorrichtung einer Batterie kommuniziert werden kann, wenn diese an das Ladekabel des Ladegeräts zum Aufladen angeschlossen wird.

Ferner kann das verbindbare Stromkabel auch ein Stromkabel eines batteriebetriebenen Flurförderzeugs darstellen, wobei z.B. die Vorrichtung dem Flurförderzeug zugeordnet ist und über die an dem Stromkabel befindliche Antenne mit einer externen Kommunikationsvorrichtung einer Batterie kommuniziert werden kann, wenn diese an das Stromkabel des Flurförderzeugs angeschlossen wird.

Eine Ausgestaltung der Erfindung sieht vor, dass mindestens eine an den mindestens einen Antennenanschluss angeschlossene Antenne an oder in einem Stecker des Stromkabels platziert ist.

Diese Platzierung kann z.B. dann vorteilhaft sein, wenn sich die externe Kommunikationsvorrichtung oder eine Antenne der externen Kommunikationsvorrichtung z.B. ebenfalls in einem Stecker oder in einer Dose befindet, in welchen/welche der Stecker des Stromkabels einsteckbar ist, wie z.B. der Stecker einer Batterie, da hier eine sehr kurze Distanz zwischen der erfindungsgemäßen Vorrichtung und der externen Kommunikationsvorrichtung erzielt werden kann, wenn der Stecker des Stromkabels mit dem Stecker oder der Dose verbunden ist.

Beispielsweise kann eine Batterie ein Stromkabel mit einem Stecker aufweisen, wobei die externe Kommunikationsvorrichtung in dem Stecker platziert ist.

Ferner kann z.B. das verbindbare Stromkabel ein Ladekabel eines Ladegeräts sein, so dass bei Einstecken des Steckers des Ladekabels des Ladegeräts in den Stecker der Batterie eine sehr geringe Distanz zwischen der Antenne der Vorrichtung und der externen Kommunikationseinrichtung erzielt werden kann.

Der gleiche Vorteil ergibt sich, wenn das verbindbare Stromkabel ein Stromkabel ein Flurförderzeugs ist und die Batterie mit dem Stecker des Stromkabels des Flurförderzeugs verbunden wird.

Eine Ausgestaltung der Erfindung sieht vor, dass die Vorrichtung eine Schnittstelle umfasst, wobei diese Schnittstelle zur Datenkommunikation mit einer Elektronik der mit einer Batterie für Flurförderzeuge verbindbaren Vorrichtung eingerichtet ist.

Über diese Schnittstelle können beispielsweise Daten zur der Elektronik gesendet werden, oder aber auch Daten von der Elektronik empfangen werden, z.B. zum Aussenden über die Funkschnittstelle. Beispielsweise kann die Elektronik eine Ladeelektronik eines Ladegeräts sein oder eine Fahrzeugelektronik eines Flurförderzeugs. Die Schnittstelle kann beispielsweise eine serielle Datenschnittstelle umfassen. Z.B. kann die Schnittstelle eine USB-Schnittstelle umfassen.

Ferner kann die Schnittstelle auch zur Energieversorgung der Vorrichtung verwendet werden.

Eine Ausgestaltung der Erfindung sieht vor, dass die Prozessoreinheit eingerichtet ist, über die Funkschnittstelle Daten zu der externen Kommunikationsvorrichtung zur Speicherung der Daten in der externen Kommunikationsvorrichtung zu senden.

Die Vorrichtung kann somit als Schreibvorrichtung für eine externe Kommunikationsvorrichtung verwendet werden, wobei die gesendeten Daten z.B. in Speichermitteln der externen Kommunikationsvorrichtung gespeichert werden können.

Eine Ausgestaltung der Erfindung sieht vor, dass die gesendeten Daten mindestens eine Information aus den folgenden Informationen umfassen: Serviceinformationen, Ladeinformationen und Postfachinformationen.

Ist die Vorrichtung z.B. einem Ladegerät zugeordnet, so können z.B. Ladeinformationen, wie z.B. Volladung oder Teilladung oder weitere Informationen, über einen Ladevorgang einer Batterie in einer externen Kommunikationsvorrichtung der Batterie gespeichert werden.

Ferner können auch Serviceinformation, wie z.B. Inspektionsdaten in die externe Kommunikationsvorrichtung eingespeichert werden.

Ist die Vorrichtung z.B. einem Flurförderzeug zugeordnet, so können z.B., wie zuvor erläutert, Postfachinformationen, welche z.B. für ein Ladegerät bestimmt sind, zu der externen Kommunikationsvorrichtung zur Zwischenspeicherung gesendet werden.

Es können aber auch noch weitere Daten zu der externen Kommunikationsvorrichtung gesendet werden, wie z.B. Batterienenndaten oder anderen batteriebezogene Daten, so dass z.B. bei einem Austausch der Batterie sich neue Batterienenndaten in der externen Kommunikationsvorrichung mittels Funkübertragung einspeichern lassen.

Eine Ausgestaltung der Erfindung sieht vor, dass die Prozessoreinheit eingerichtet ist, über die Funkschnittstelle Daten von der externen Kommunikationsvorrichtung zu empfangen.

Beispielsweise können speziell gewünschte Daten von der externen Kommunikationsvorrichtung angefordert werden, z.B. mittels eines über die Funkschnittstelle ausgesandten Funksignals, so dass die gewünschten Daten über die Funkschnittstelle von der externen Kommunikationsvorrichtung empfangen werden können.

Eine Ausgestaltung der Erfindung sieht vor, dass die empfangenen Daten mindestens eine Information aus den folgenden Informationen umfassen: Serviceinformationen, Ladeinformationen, Informationen über Batterienenndaten und Postfachinformationen.

Ist die Vorrichtung z.B. einem Ladegerät zugeordnet, so können z.B. Ladeinformationen, wie z.B. Volladung oder Teilladung oder weitere Informationen, über einen Ladevorgang einer Batterie von einer externen Kommunikationsvorrichtung der Batterie empfangen werden und diese Ladeinformation z.B. für einen optimierten Ladevorgang verwendet werden. Ferner können auch Batterienenndaten von der externen Kommunikationsvorrichtung empfangen werden, so dass auch diese Informationen für einen Ladeprozess der Batterie verwendet werde können.

Die Serviceinformätion können z.B. Auskunft über bereits erfolgte Inspektionen an der Batterie geben.

Ferner können für das Ladegerät bestimmte Postfachinformationen, die z.B. von einem Flurförderzeug in die externe Kommunikationsvorrichtung gespeichert worden sind, ausgelesen werden.

Eine Ausgestaltung der Erfindung sieht vor, dass die Funkschnittstelle auf RFID-Technologie basiert.

Die o.g. Aufgabe wird ferner gelöst durch ein System zur Kommunikation zwischen zwei Kommunikationsvorrichtungen, umfassend eine erste Vorrichtung nach einer der zuvor genannten erfindungsgemäßen Vorrichtungen, und umfassend eine zweiten Vorrichtung nach einer der zuvor genannten erfindungsgemäßen Vorrichtungen.

Die erste Vorrichtung kann z.B. die zuvor beschriebene erfindungsgemäße Vorrichtung mit allen möglichen Ausgestaltungen, welche einer aufladbaren Batterie für Flurförderzeuge räumlich nah zugeordnet ist, sein, oder die zuvor beschriebenene erfindungsgemäße Vorrichtungen mit allen möglichen Ausgestaltungen, welche in einem Stecker für Ladekabel von Batterien für Flurförderzeuge platziert ist, sein.

Die zweite Vorrichtung kann z.B. die zuvor beschriebene erfindungsgemäße Vorrichtung mit allen möglichen Ausgestaltungen, welche einer mit einer Batterie für Flurförderzeuge verbindbarer Vorrichtung räumlich nah zugeordnet ist, sein.

Für dieses System gelten sämtliche zuvor genannten Erläuterungen und Vorteile bezüglich der ersten und zweiten Vorrichtung.

### KURZE BESCHREIBUNG DER FIGUREN

Die Erfindung wird im folgenden anhand von Ausführungsbeispiele zeigenden Zeichnungen näher erläutert.
Fig. 1a: Eine schematische Darstellung einer ersten exemplarischen, nicht erfindungsgemäßen räumlichen Zuordnung einer exemplarischen Ausführungsform der Vorrichtung;
Fig. 1b: Eine schematische Darstellung einer zweiten exemplarischen, nicht erfindungsgemäßen räumlichen Zuordnung einer exemplarischen Ausführungsform der Vorrichtung;
Fig. 1c: Eine schematische Darstellung einer dritten exemplarischen räumlichen Zuordnung einer exemplarischen Ausführungsform der erfindungsgemäßen Vorrichtung;
Fig. 1d: Eine schematische Darstellung einer vierten exemplarischen räumlichen Zuordnung einer exemplarischen Ausführungsform der erfindungsgemäßen Vorrichtung;
Fig. 1e: Eine schematische Darstellung einer fünften exemplarischen räumlichen Zuordnung einer exemplarischen Ausführungsform der erfindungsgemäßen Vorrichtung;
Fig. 2a: Eine schematische Darstellung einer ersten exemplarischen Ausführungsform der erfindungsgemäßen Vorrichtung;
Fig. 2b: Eine schematische Darstellung einer zweiten exemplarischen Ausführungsform der erfindungsgemäßen Vorrichtung;
Fig. 2c: Eine schematische Darstellung einer dritten exemplarischen Ausführungsform der erfindungsgemäßen Vorrichtung;
Fig. 3a: Eine schematische Darstellung einer sechsten exemplarischen räumlichen Zuordnung einer exemplarischen Ausführungsform der erfindungsgemäßen Vorrichtung;
Fig. 3b: Eine schematische Darstellung einer siebten exemplarischen räumlichen Zuordnung einer exemplarischen Ausführungsform der erfindungsgemäßen Vorrichtung;
Fig. 3c: Eine schematische Darstellung einer achten exemplarischen räumlichen Zuordnung einer exemplarischen Ausführungsform der erfindungsgemäßen Vorrichtung;
Fig. 3d: Eine schematische Darstellung einer neunten exemplarischen räumlichen Zuordnung einer exemplarischen Ausführungsform der erfindungsgemäßen Vorrichtung;
Fig. 4a: Eine schematische Darstellung einer vierten exemplarischen Ausführungsform der erfindungsgemäßen Vorrichtung;
Fig. 4b: Eine schematische Darstellung einer fünften exemplarischen Ausführungsform der erfindungsgemäßen Vorrichtung;

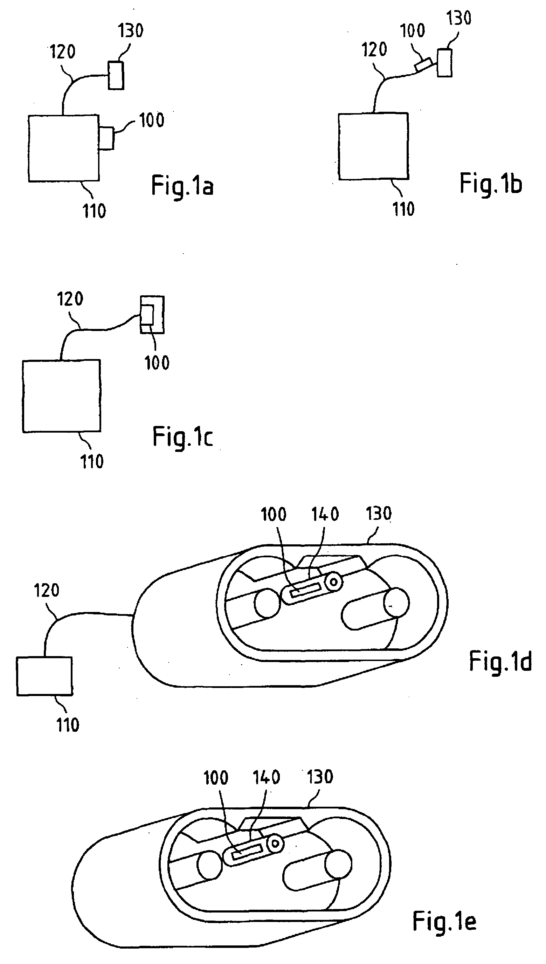

Fig. 1a zeigt eine schematische Darstellung einer ersten exemplarischen, nicht erfindungsgemäßen räumlichen Zuordnung einer exemplarischen Ausführungsform der Vorrichtung 100, welche einer aufladbaren Batterie 110 für Flurförderzeuge derart räumlich nah zugeordnet ist, dass sie an einer Außenseite der Batterie 110 angebracht ist.

Die Vorrichtung 100 umfasst Speichermittel (nicht in Fig. 1a dargestellt), in denen ein der Batterie 110 zugeordneter Identifikator gespeichert ist, und eine mit den Speichermitteln zusammenwirkende Funkschnittstelle (nicht in Fig. 1a dargestellt), wobei die Funkschnittstelle zur bidirektionalen Datenübertragung zwischen den Speichermitteln und einer externen Kommunikationsvorichtung eingerichtet ist.

An die Batterie 110 ist ferner ein Ladekabel 120 mit einem Ladestecker 130 angeschlossen. Mit diesem Ladestecker 130 kann die Batterie 110 z.B. mit einem Ladegerät zum Aufladen der Batterie 110 verbunden werden, oder aber mit einem Flurförderzeug zur Energieversorung des Flurförderzeugs verbunden werden.

Über die Funkschnittstelle der Vorrichtung 100 kann der in den Speichermitteln gespeicherte Identifikator von der Vorrichtung 100 ausgesendet werden und von einer externen Kommunikationsvorrichtung, die z.B. an einem Flurförderzeug oder einem Ladegerät angebracht ist, empfangen werden. Somit kann die Batterie 100 durch den ausgesendeten Identifikator z.B. von einem Flurförderzeug oder einem Ladegerät eindeutig identifiziert werden.

Des Weiteren kann die Vorrichtung 100 von einer externen Kommunikationsvorrichtung Daten empfangen und diese Daten in den Speichermitteln speichern, und die Vorrichtung 100 kann auch dazu eingerichtet sein, diese gespeicherten Daten an eine externe Kommunikationsvorrichtung zu senden.

Durch die räumliche Zuordnung der Vorrichtung 100 zu der Batterie 110 befindet sich die Vorrichtung 100 in einer relativ nahen Distanz z.B. zu einem Ladegerät, wenn die Batterie 110 für einen Ladevorgang über das Ladekabel 120 und dem Ladestecker 130 an das Ladegerät angeschlossen ist. Dies weist den Vorteil auf, dass nur eine geringe Leistung zur Datenübertragung zwischen der Vorrichtung 100 und einer sich an dem Ladegerät befindlichen externen Kommunikationsvorrichtung benötigt wird. Der gleiche Vorteil ergibt sich, wenn die Batterie 110 über das Ladekabel 120 mit dem Ladestecker 130 an ein Flurförderzeug angeschlossen ist.

Das Ladegerät kann beispielsweise mittels des Identifikators die jeweils angeschlossene Batterie erkennen, und z.B. in Abhängigkeit von der erkannten Batterie ein speziell angepasstes Ladeprogramm zum Laden der Batterie durchführen.

Fig. 1b zeigt eine schematische Darstellung einer zweiten, nicht erfindungsgemäßen räumlichen Zuordnung einer exemplarischen Ausführungsform der Vorrichtung 100, welche einer aufladbaren Batterie 110 für Flurförderzeuge derart räumlich nah
zugeordnet ist, dass sie an einem Ladekabel 120 der Batterie 110 angebracht ist.

Die Anbringung der Vorrichtung 100 an dem Ladekabel 120 weist ebenfalls den Vorteil auf, dass sich die Vorrichtung 100 in einer nahen Distanz z.B. zu einem Ladegerät befindet, wenn die Batterie 110 für einen Ladevorgang über das Ladekabel 120 mit dem Ladestecker 130 an das Ladegerät angeschlossen ist. Der gleiche Vorteil ergibt sich, wenn die Batterie 110 über das Ladekabel 120 mit dem Ladestecker 130 an ein Flurförderzeug angeschlossen ist.

Fig. 1c zeigt eine schematische Darstellung einer dritten räumlichen Zuordnung einer exemplarischen Ausführungsform der erfindungsgemäßen Vorrichtung 100, welche einer aufladbaren Batterie 110 für Flurförderzeuge derart räumlich nah zugeordnet ist, dass sie in den Ladestecker 130 des Ladekabels 120 der Batterie 110 integriert ist.

Diese Anordnung ist z.B. dann besonders vorteilhaft, wenn sich z.B. eine Antenne der externen Kommunikationsvorrichtung in einem zu dem Ladestecker 130 kompatiblen Stecker bzw. Dose befindet, wie z.B. in einem Ladestecker eines Ladegeräts oder in einem Energieversorgungsstecker eines Flurförderzeugs. Hierdurch wird bei Kontaktierung des Ladesteckers 130 der Batterie 110 mit dem entsprechenden Gegenstück, wie z.B. dem Ladestecker eines Ladegeräts oder dem Energieversorgungsstecker eines Flurförderzeugs mit integrierter Antenne der externen Kommunikationsvorrichtung, eine sehr kurze Distanz zwischen der Vorrichtung 100 und der integrierten Antenne erreicht, so dass nur sehr geringe Sendeleistungen für die Datenübertragung notwendig sind.

Des Weiteren weist diese Anordnung der Vorrichtung 100 in dem Ladestecker 130 den Vorteil auf, dass die Vorrichtung 100 sehr gut mechanisch geschützt ist und somit Beschädigungen der Vorrichtung 100 vermieden werden können.

Fig. 1d zeigt eine schematische Darstellung einer vierten räumlichen Zuordnung einer exemplarischen Ausführungsform der erfindungsgemäßen Vorrichtung 100, welche eine spezielle räumlich nahe Zuordnung basierend auf der in Fig. 1c gezeigten Zuordnung darstellt.

Die Vorrichtung 100 ist hierbei wie in Fig. 1c dargestellt in dem Ladestecker 130 integriert, wobei sich die Vorrichtung 100 in einem Codierstift 140 des Ladesteckers 130 befindet. Dieser Codierstift 140 kann z.B. in den Ladestecker 130 einsteckbar sein.

Somit lässt sich die Vorrichtung 100 mit sehr geringem Aufwand in dem Ladestecker 130 integrieren, ohne dass z.B. aufwändige Änderungen des Ladesteckers 130 selbst notwendig werden. Gleichzeitig kann eine sehr gute Funkverbindung mit der externen Kommunikationsvorrichtung erzielt werden, wenn z.B. die Antenne der externen Kommunikationsvorrichtung in einem dem Ladestecker 130 zugordnetem Gegenstück angebracht ist und der Ladestecker 130 mit dem Gegenstück verbunden ist.

Fig. 1e zeigt eine schematische Darstellung einer fünften räumlichen Zuordnung einer exemplarischen Ausführungsform der erfindungsgemäßen Vorrichtung 100, bei der die Vorrichtung 100 in einem Stecker 130 für Ladekabel von Batterien für Flurförderfahrzeuge platziert ist. Dieser Stecker kann dann z.B. an ein Ladekabel einer Batterie angeschlossen werden, wie es z.B. in Fig. 1d dargestellt ist. Die Vorrichtung 100 ist in einem Codierstift 140 des Steckers 130 platziert.

Die Funktionsweise der in den fünf Figuren 1a-1e gezeigten exemplarischen Vorrichtung 100 wird im Folgenden anhand von drei verschiedenen exemplarischen Ausführungsformen der erfindungsgemäßen Vorrichtung, welche für jede der in den Figuren 1a-1f gezeigten Vorrichtung 100 verwendet werden können, erläutert.

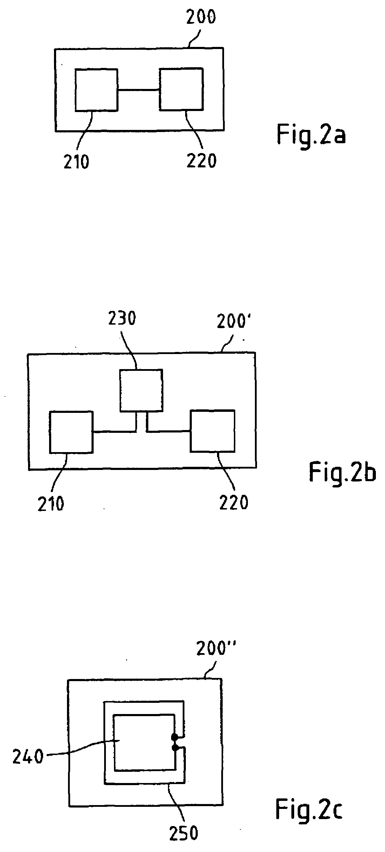

Fig. 2a zeigt eine schematische Darstellung einer ersten exemplarischen Ausführungsform der erfindungsgemäßen Vorrichtung 200, welche einer aufladbaren Batterie 100 für Flurförderfahrzeuge räumlich zugeordnet ist, wobei die Vorrichtung 200 Speichermittel 210 umfasst, in denen ein der Batterie zugeordneter Identifikator gespeichert ist, und wobei die Vorrichtung 200 ferner eine mit den Speichermitteln 210 zusammenwirkende Funkschnittstelle 220 umfasst, wobei die Funkschnittstelle 220 zur bidirektionalen Datenübertragung zwischen den Speichermitteln 210 und einer externen Kommunikationsvorrichtung eingerichtet ist.

Die Speichermittel 210 können z.B. ein nicht-flüchtiger Speicher sein, welcher in dem Speicher gespeicherte Daten auch ohne Stromversorgung gespeichert hält.

Der in den Speichermitteln 210 gespeicherte Identifikator kann z.B. eine Identifzierungsnummer sein, wie z.B. eine 32 Bit lange Nummer.

Die Funkschnittstelle 220 ist mit den Speichermitteln 210 verbunden, so dass die Funkschnittstelle 220 den Identifikator über Funk an eine externe Kommunikationsvorrichtung senden kann, wie zuvor bereits beschrieben. Dementsprechend gelten die bezüglich der in den Figuren 1a-1d gezeigten schematischen Darstellungen genannten Erläuterungen und Vorteile gleichermaßen für die in den Figuren 2a-2c gezeigten erfindungsgemäßen Vorrichtungen 200, 200' und 200".

Die Funkschnittstelle 220 weist Signalverarbeitungsmittel und eine Antenne (nicht in Fig. 2a dargestellt) auf, so dass in den Speichermitteln 210 gespeicherte Daten, wie der Identifikator, unter Verwendung von den Signalverarbeitungsmitteln moduliert und über die Antenne ausgesendet werden können. Die Funkschnittstelle kann z.B. auf RFID Technologie basieren, wobei die Antenne ein RFID Signal aussendet. Dieses Signal kann z.B. eine Trägerfrequenz von 125kHz aufweisen, kann aber auch eine andere RFID-typische Trägerfrequenz aufweisen. Die Antenne ist auf die jeweilige Frequenz abgestimmt.

Ferner ist die Funkschnittstelle 220 auch zum Datenempfang eingerichtet, in dem z.B. Funksignale über die Antenne empfangen werden und unter Verwendung von den Signalverarbeitungsmittteln demoduliert werden. Diese empfangenen Daten können dann z.B. in den Speichermitteln 210 gespeichert werden.

Der Identifikator ist fest in den Speichermitteln 210 eingespeichert und kann nicht durch die Funkschnittstelle 220 überschrieben oder geändert werden. Somit ist gewährleistet, dass der Identifikator nicht verfälscht werden kann und eine sichere Identifikation der Batterie erfolgen kann.

Die Vorrichtung 200 kann z.B. eine eigene Energieversorgung aufweisen, z.B. kann eine Batterie (nicht in Fig. 2a dargestellt) in der Vorrichtung 200 platziert sein, so dass die Funkschnittstelle 220 und die Speichermittel 210 mit Energie aus dieser Batterie gespeist werden und somit der Identifikator über die Funkschnittstelle 220 ausgesendet werden kann.

Des Weiteren kann die Funkschnittstelle 220 aber auch derart eingerichtet sein, dass sie aus empfangenen Funksignalen von einer externen Kommunikationsvorrichtung Energie zur Versorgung der Vorrichtung 200 gewinnt, z.B. durch induktive Energieübertragung von der externen Kommunikationsvorrichtung zur der Funkschnittstelle. Wird z.B. die Vorrichtung 100 durch Energie von einer externen Kommunikationsvorrichtung versorgt, so können in Reaktion auf diese Energieversorgung Daten, wie z.B. der Identifikator, aus den Speichermitteln 210 ausgelesen und über die Funkschnittstelle ausgesendet werden. Somit benötigt die Vorrichtung 100 keine eigene Batterie, wodurch z.B. die Wartungskosten gesenkt werden können.

Des Weiteren können in den Speichermitteln 210 weitere batteriespezifische Daten gespeichert sein, wie z.B. Batterienenndaten, die z.B. die Nennspannung, die Nennkapazität, die Plattenzahl, den Hersteller und das Baujahr der Batterie 110 umfassen können. Diese weiteren batteriespezifischen Daten können auch über die Funkschnittstelle 220 an eine externe Kommunikationsvorrichtung ausgesendet werden. Somit kann z.B. ein Ladegerät, welches diese weiteren batteriespezifischen Daten über eine externe Kommunikationsvorrichtung empfängt, diese weiteren batteriespezifischen Daten z.B. für einen optimierten Ladeprozess verwenden.

Fig. 2b zeigt eine schematische Darstellung einer zweiten exemplarischen Ausführungsform der erfindungsgemäßen Vorrichtung 200', welche auf der zuvor in Bezug auf Fig. 2a gezeigten ersten exemplarischen Ausführungsform basiert. Dementsprechend gelten die zuvor genannten Erläuterungen und Vorteile bezüglich der ersten exemplarischen Ausführungsform der erfindungsgemäßen Vorrichtung 200 gleichermaßen für die in Fig. 2b dargestellte Vorrichtung 200'.

Die Vorrichtung 200' umfasst neben den Speichermitteln 210 und der Funkschnittstelle 220 eine Steuerlogik 230.

Die Steuerlogik 230 ist dazu eingerichtet, über die Funkschnittstelle 220 empfangene Daten in den Speichermitteln 210 abzuspeichern.

Somit können z.B. Servicedaten wie z.B. Inspektionsdaten z.B. von einem Ladegerät empfangen werden und in den Speichermitteln 210 abgespeichert werden, oder es können z.B. Ladeinformationen, z.B. ob eine Volladung oder eine Teilladung erfolgt, von einem Ladegerät empfangen werden und in den Speichermitteln 210 abgespeichert werden. Auch die zuvor erwähnten weiteren Batterienenndaten können über die Funkschnittstelle 220 empfangen und von der Steuerlogik 230 in den Speichermitteln 210 hinterlegt werden.

Über die Steuerlogik 230 können auch gezielt Daten in den Speichermitteln 210 abgeändert oder gelöscht werden, wobei dies in Reaktion auf ein empfangenes Funksignal erfolgen kann.

Des Weiteren ist die Steuerlogik 230 auch dazu eingerichtet, Daten aus den Speichermitteln 210 auszulesen und über die Funkschnittstelle 220 auszusenden, wobei dies in Reaktion auf ein über die Funkschnittstelle empfangenes Funksignal erfolgen kann.

Die Vorrichtung 200' ist als eine passive Vorrichtung ausgelegt, so dass die Energieversorgung über die Funkschnittstelle 210 basierend auf induktiver Energieübertragung von einer externen Kommunikationsvorrichtung erfolgt, wie z.B. von einer externen Kommunikationsvorrichtung eines Ladegeräts oder eines Flurförderzeugs. Empfängt die Funkschnittstelle 210 Funksignale von einer externen Kommunikationsvorrichtung, so versorgt die Funkschnittstelle 210 die Vorrichtung 200' mit Energie, wobei die Steuerlogik 230 eingeschaltet wird und diese z.B. sämtliche Daten aus den Speichermitteln 210 auslesen kann und über die Funkschnittstelle an die externe Kommunikationsvorrichtung aussenden kann. Die Steuerlogik 230 kann aber auch ausgewählte Daten, welche von der externen Kommunikationsvorrichtung durch ein Funksignal angefordert werden, aus den Speichermitteln 210 auslesen und nur diese ausgewählten Daten über die Funkschnittstelle 220 aussenden.

Ferner können die Speichermittel 210 auch als Postfach für von einem Flurförderzeug empfangenen Daten verwendet werden, indem z.B. über die Funkschnittstelle 220 Daten von einem Flurförderzeug empfangen werden, während die Batterie 110 mit dem Flurförderzeug verbunden ist, und diese Daten in den Speichermitteln 210 abgespeichert werden. Wird dann die Batterie 110 für einen Ladevorgang an ein Ladegerät angeschlossen, dann können diese vom Flurförderzeug empfangenen und abgespeicherten Daten an das Ladegerät übertragen werden. Somit ermöglicht die Vorrichtung 200' eine Postfachfunktion für die Kommunikation zwischen einem Flurförderzeug und einem Ladegerät. Diese Kommunikation kann auch in umgekehrter Richtung erfolgen, d.h. die Speichermittel 210 können als Postfach für von dem Ladegerät empfangenen Daten, welche an ein Flurförderzeug gesendet werden sollen, verwendet werden.

Fig. 2c zeigt eine schematische Darstellung einer dritten exemplarischen Ausführungsform der erfindungsgemäßen Vorrichtung 200", welche auf den zuvor in Bezug auf die in Figuren 2a und 2b gezeigten ersten und zweiten exemplarischen Ausführungsformen basiert. Dementsprechend gelten die zuvor genannten Erläuterungen und Vorteile bezüglich der ersten und zweiten exemplarischen Ausführungsform der erfindungsgemäßen Vorrichtung 200 und 200' gleichermaßen für die in Fig. 2c dargestellte Vorrichtung 200".

Die Vorrichtung 200" weist einen integrierten Schaltkreis 240 auf, welcher die Speichermitteln 210 und die Signalverarbeitungsmittel der Funkschnittstelle 220 umfasst. Ferner kann der integrierte Schaltkreis 240 auch die Steuerlogik 230 umfassen. An den integrierten Schaltkreis 240 ist die Antenne 250 der Funkschnittstelle 220 angeschlossen.

Der integrierte Schaltkreis 240 und die Antenne 250 bilden einen passiven RFID-Transponder 200", d.h. die Energie zum Betreiben der integrierten Schaltung wird von der Antenne 250 über induktive Energieübertragung von einer anderen Kommunikationsvorrichtung, welche Funksignale and die Antennte 250 sendet, aus den empfangenen Funksignalen gewonnen.

Somit lässt sich der RFID-Transponder 200" sehr kompakt fertigen und benötigt keine eigene Batterie zur Energieversorgung. Der RFID-Tranponder 200" kann z.B. in einem Glasgehäuse untergebracht sein.

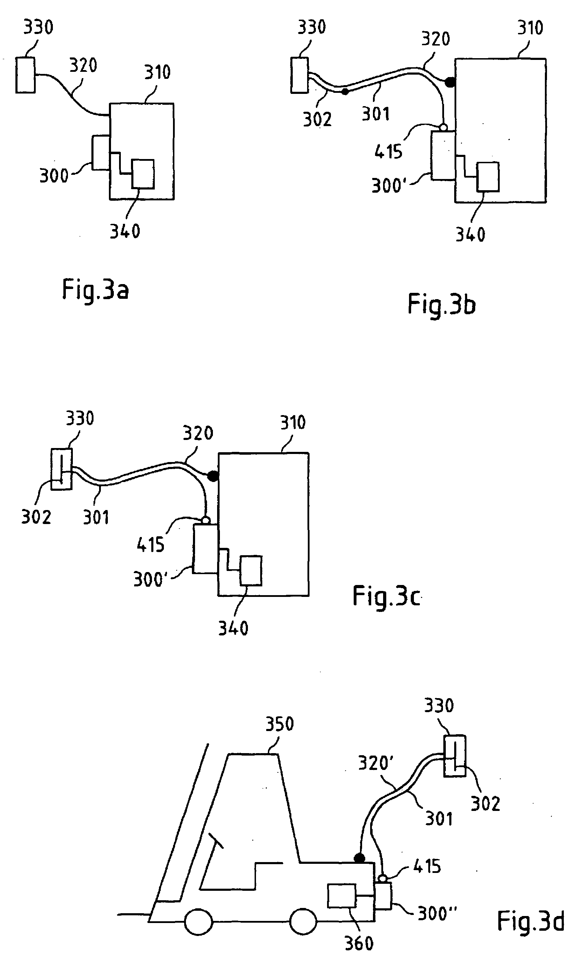

Fig. 3a zeigt eine schematische Darstellung einer fünften exemplarischen räumlichen Zuordnung einer exemplarischen Ausführungsform der erfindungsgemäßen Vorrichtung 300, welche einem Ladegerät 310 für Batterien 110 für Flurförderzeugen räumlich nah zugeordnet ist, wobei die erfindungsgemäße Vorrichtung 300 an dem Ladegerät 310 angebracht ist.

An das Ladegerät 310 ist ein Stromkabel 320 mit einem Stecker 330 angebracht, wobei der Stecker 330 auf einen passenden Stecker 130 einer Batterie 110 für Flurförderzeuge gesteckt werden kann, so dass das Ladegerät 310 eine angeschlossene Batterie 110 aufladen kann.

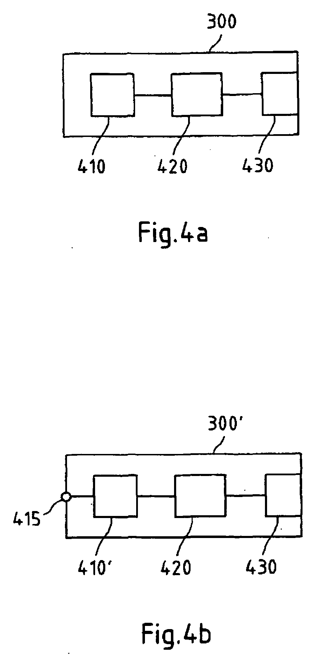

Die erfindungsgemäße Vorrichtung 300 umfasst eine Prozessoreinheit 420 und eine mit der Prozessoreinheit verbundene Funkschnittstelle 410, wie in Fig. 4a dargestellt, wobei die Funkschnittstelle 410 zur Datenübertragung mit einer externen Kommunikationsvorrichtung eingerichtet ist, und wobei diese Datenübertragung das Empfangen eines einer Batterie zugeordneten Identifikators umfasst.

Die externe Kommunikationsvorrichtung kann beispielsweise jede der zuvor bezüglich der Figuren 1a-1e und 2a-2c beschriebenen Vorrichtungen 100, 200, 200' und 200" sein.

Somit kann die in Fig. 3a dargestellte Vorrichtung 300 mit einer externen Kommunikationsvorrichtung, die in räumlicher Nähe zu einer Batterie 110 angeordnet ist, kommunizieren, wenn z.B. die Batterie zum Aufladen an das Ladegrät 310 angeschlossen wird, da sich dann die Vorrichtung 300 und die externe Kommunikationsvorrichtung relativ nah zueinander befinden, so dass nur eine geringe Sendeleistung für die Kommunikation benötigt wird. Die Vorrichtung 300 empfängt über die Funkschnittstelle 410 einen von der externen Kommunikationsvorrichtung ausgesendeten Identifikator, welcher die Batterie 110 eindeutig identifiziert. Dieser Identifikator kann über eine Schnittstelle 430 der Vorrichtung 300 an die Elektronik 340 des Ladegeräts übertragen werden, so dass das Ladegerät 310 die aufzuladenene Batterie 110 erkennen und eindeutig identifizieren kann. Die Schnittstelle 430 kann beispielsweise eine serielle Datenschnittstelle 430 umfassen. Ferner kann die Vorrichtung 300 über die Schnittstelle 430 auch mit Energie von dem Ladegerät versorgt werden.

Ferner kann die Vorrichtung 300 von der externen Kommunikationsvorrichung auch weitere Daten empfangen, wie z.B. batteriespezifische Daten wie z.B. Batterienenndaten, oder Serviceinformationen, oder Ladeinformationen über vorangeganene Ladevorgänge, oder Postfachinformationen wie z.B. für das Ladegerät 310 bestimmte Informationen von einem Flurförderzeug, welche in der externen Kommunikationsvorrichtung zwischengespeichert sind. Diese empfangenen Daten können dann auch der Elektronik 340 des Ladegeräts über die Schnittstelle 430 zur Verfügung gestellt werden. Beispielsweise kann die Vorrichtung 300 auch gezielt Daten von der externen Kommunikationsvorrichtung per Funk anfordern.

Des Weiteren ist die Vorrichtung 300 auch dazu eingerichtet, über die Funkschnittstelle 410 Daten an eine externe Kommunikationseinrichtung zur Speicherung dieser Daten in Speichermitteln 110 der externen Kommunikationseinrichtung zu senden. Diese Daten können z.B. Ladeinformationen, Serviceinformationen oder Postfachinformationen, welche für ein Flurförderzeug bestimmt sind und in der externen Kommunikationsvorrichtung zwischengespeichert werden sollen, umfassen.

Somit lassen sich beispielsweise während eines Ladevorgangs einer Batterie 110 sehr einfach batteriebezogene Daten von der der Batterie 110 zugeordneten Kommunikationsvorrichtung 100, 200, 200', 200'' zur Vorrichtung 300 des Ladegeräts 310 übertragen, so dass das Ladegerät den Ladevorgang unter Verwendung dieser Daten optimieren und anpassen kann, und umgekehrt können Daten in der Kommunikationsvorrichtung 100, 200, 200', 200" gespeichert werden.

Die Funkschnittstelle 410 kann z.B. auf RFID-Technologie basieren, so dass mit einem RFID-Transponder als externe Kommunikationsvorrichtung kommuniziert werden kann. Die Funkschnittstelle 410 umfasst Signalverarbeitungsmittel und kann eine eigene Antenne aufweisen (nicht in Fig. 4a dargestellt). Ferner kann die Funkschnittstelle 410 derart eingerichtet sein, dass sie die externe Kommunikationsvorrichtung basierend auf induktiver Energieübertragung mit Energie versorgen kann.

Wie in Fig. 4b dargestellt, kann eine weitere Ausführungsform der erfindungsgemäßen Vorrichtung 300' im Gegensatz zu der in Fig. 4a dargestellten Vorrichtung 300 eine modifizierte Funkschnittstelle 410' aufweisen, welche im Grundsatz auf der zuvor beschriebenen Funkschnittstelle 410 basiert, die allerdings keine eigene Antenne sondern einen Antennenanschluss 415 aufweist, so dass eine externe Antenne an die modifizierte Funkschnittstelle 410' angeschlossen werden kann. Diese weitere Ausführungsform der erfindungsgemäßen Vorrichtung 300' kann z.B. vorteilhaft in den in Figuren 3b-3d gezeigten Anordnungen verwendet werden.

Die Fig. 3b zeigt das aus der Fig. 3a bekannte Ladegerät 310, an welches das Ladekabel 320 mit dem Stecker 330 zum Aufladen einer Batterie 110 angeschlossen ist, und an welches die einen Antennanschluss 415 aufweisende Vorrichtung 300' angebracht ist. Die Vorrichtung 300' kann aber auch in dem Ladegerät 310 platziert sein.

Eine Antenne 302, welche über ein Antennkabel 301 mit dem Antennenanschluss 415 verbunden ist, ist an dem Ladekabel platziert. Diese Anordnung kann z.B. dann vorteilhaft sein, wenn die in Fig. 1b dargestellte Batterie 110 mit der Kommunikationsvorrichtung 100 an dem Ladekabel 120 der Batterie 120 zum Aufladen durch Zusammenstecken der Stecker 130 und 330 mit dem Ladegerät 310 verbunden wird, da sich dann die Antenne 302 sehr nahe an der externen Kommunikationsvorrichtung 100 befindet.

In Fig. 3c ist eine weitere erfindungsgemäße Zuordnung der Antenne 302 dargestellt, wobei sich nun die Antenne 302 in dem Stecker 330 des Ladekabels 320 des Ladegeräts 310 befindet. Diese Anordnung kann z.B. dann vorteilhaft sein, wenn die in Figuren 1c, 1d dargestellte Batterie 110 mit der Kommunikationsvorrichtung 100 in dem Stecker 130 des Ladekabels 120 zum Aufladen durch Zusammenstecken der Stecker 130 und 330 mit dem Ladegerät 310 verbunden wird, da sich dann die Antenne 302 sehr nahe an der in dem Stecker 130 platzierten externen Kommunikationsvorrichtung 100 befindet.

Fig. 3a zeigt eine schematische Darstellung einer weiteren exemplarischen räumlichen Zuordnung einer exemplarischen Ausführungsform der erfindungsgemäßen Vorrichtung 300", welche einem exemplarisch dargestellten Flurförderzeug 350 räumlich nah zugeordnet ist, wobei die die erfindungsgemäße Vorrichtung 300'' an dem Flurförderzeug 350 angebracht, und die Vorrichtung 300' einen Antennenanschluss 415 aufweist, an welches eine Antenne 302 über ein Antennenkabel 301 angeschlossen ist. Die Antenne 302 befindet sich in dem Stecker 330 des Stromkabel 320', über den sich eine Batterie 110 an das Flurförderzeug 350 anschliessen lässt.

Die Vorrichtung 300" kann beispielweise der in Fig. 4b dargestetllten Vorrichtung 300' entsprechen, wobei eine Elektronik 360 des Flurförderzeugs 350 über die Schnittstelle 430 mit der Vorrichtung 300" verbunden ist. Dementsprechend gelten die zuvor genannten Erläuterungen und Vorteile bezüglich der in Fig. 4b gezeigten Vorrichtung 300' gleichermaßen für die Vorrichtung 300". Insbesondere eignet sich die Vorrichtung 300" zum Auslesen und Schreiben der zuvor erläuterten Postfachinformation, welche in den Speichermitteln 210 einer einer Batterie 110 zugeordneten Kommunikationsvorrichtung 100, 200, 200', 200' zwischengespeichert ist, wenn diese Batterie an das Flurförderzeug 350 angeschlossen wird.

Die zuvor genannten Erläuterungen und Vorteile bezüglich der in Fig. 3c gezeigten Anordnung gelten gleichermaßen auch für die in Fig. 3d gezeigte Anordnung.

Ferner kann die Antenne 302 ähnlich zu der in Fig. 3b gezeigten Anordnung an dem Stromkabel 320' des Flurförderzeugs 350 verwendet werden (nicht in Fig. 3d dargestellt). Oder es kann, analog zu der in Fig. 3a dargestellten Anordnung, für das Flurförderzeug 350 die Vorrichtung 300 mit der integrierten Antenne verwendet werden.

## Patentansprüche

1. Vorrichtung (100,200,200',200"), welche einer aufladbaren Batterie (110) für Flurförderzeuge räumlich nah zugeordnet ist, umfassend:
- Speichermittel (210), in denen ein der Batterie (110) zugeordneter Identifikator gespeichert ist,
- eine mit den Speichermitteln (210) zusammenwirkende Funkschnittstelle (220), wobei die Funkschnittstelle (220) zur bidirektionalen Datenübertragung zwischen den Speichermitteln (110) und einer externen Kommunikationsvorrichtung (300,300') eingerichtet ist,
**dadurch gekennzeichnet, dass** die Vorrichtung (100,200,200',200") dazu eingerichtet ist, weitere Daten über die Funkschnittstelle (220) zu empfangen und diese in den Speichermitteln (210) einzuspeichern, und wobei diese weiteren Daten nicht batteriebezogene Postfachinformationen umfassen, wobei die Vorrichtung (100,200,200',200'') in einem Codierstift (140) eines Steckers (130) eines Ladekabels (120) der zugehörigen Batterie (110) platziert ist.

2. Vorrichtung nach Anspruch 1, **dadurch gekennzeichnet, dass** die Funkschnittstelle (220) ferner zur Energieversorgung der Vorrichtung basierend auf induktiver Energieübertragung von der externen Kommunikationsvorrichtung (300,300') eingerichtet ist.

3. Vorrichtung nach einem der voranstehenden Ansprüche, **dadurch gekennzeichnet, dass** die Funkschnittstelle (220) mindestens eine Antenne (250) und Signalverarbeitungsmittel umfasst.

4. Vorrichtung nach einem der voranstehenden Ansprüche, **dadurch gekennzeichnet, dass** in den Speichermitteln (210) Batterienenndaten einspeicherbar sind, und diese Batterienenndaten mindestens eine Information aus den folgenden Informationen umfassen:
- Nennspannung;
- Nennkapazität;
- Plattenzahl;
- Hersteller;
- Baujahr.

5. Vorrichtung nach einem der voranstehenden Ansprüche, **dadurch gekennzeichnet, dass** die weiteren Daten mindestens eine Information aus den folgenden Informationen umfassen:
- Serviceinformationen;
- Ladeinformationen.

6. Vorrichtung nach einem der voranstehenden Ansprüche, **dadurch gekennzeichnet, dass** sie eine mit den Speichermitteln (210) und der Funkschnittstelle (220) verbundene Steuerlogik (230) umfasst.

7. Vorrichtung nach Anspruch 6, **dadurch gekennzeichnet, dass** die Steuerlogik (230) eingerichtet ist, über die Funkschnittstelle (220) empfangene Daten in den Speichermitteln (210) abzuspeichern.

8. Vorrichtung nach Anspruch 6 oder 7, **dadurch gekennzeichnet, dass** die Steuerlogik (230) eingerichtet ist, Daten aus den Speichermitteln (210) auszulesen und über die Funkschnittstelle (220) auszusenden.

9. Vorrichtung nach einem der voranstehenden Ansprüche, **dadurch gekennzeichnet, dass** die Funkschnittstelle (220) auf RFID-Technologie basiert.

10. Vorrichtung nach einem der voranstehenden Ansprüche, **dadurch gekennzeichnet, dass** die Vorrichtung (100,200,200',200'') ein RFID-Transponder ist.

11. System zur Kommunikation zwischen zwei Kommunikationsvorrichtungen, umfassend:
- eine erste Vorrichtung (100,200,200',200") nach einem der Ansprüche 1-10;
- eine zweite Vorrichtung (300,300"), welche einer mit einer Batterie (110) für Flurförderzeuge verbindbaren Vorrichtung (310,250) räumlich nah zugeordnet ist, wobei die zweite Vorrichtung (300,300") umfasst:
- eine Prozessoreinheit (420);
- eine mit der Prozessoreinheit (420) verbundene Funkschnittstelle (410,410'), wobei die Funkschnittstelle (410,410') zur bidirektionalen Datenübertragung mit einer externen Kommunikationsvorrichtung (100,200,200',200") eingerichtet ist, und wobei diese Datenübertragung das Empfangen eines einer Batterie (110) zugeordneten Identifikators umfasst, wobei die Prozessoreinheit (420) ferner dazu eingerichtet ist, über die Funkschnittstelle (410,410') Daten zu der externen Kommunikationsvorrichtung (100,200,200',200'') zur Speicherung der Daten in der externen Kommunikationsvorrichtung (100,200,200',200") zu senden und/oder über die Funkschnittstelle (410,410') Daten von der externen Kommunikationsvorrichtung zu empfangen, und wobei die gesendeten Daten und/oder empfangenen Daten nicht batteriebezogene Postfachinformationen umfassen.

12. System nach Anspruch 11, wobei die mit einer Batterie für Flurförderzeuge verbindbare Vorrichtung (310,350) ein Ladegerät (310) zum Aufladen von Batterien für Flurförderfahrzeuge ist oder ein mit Batterien betreibbares Flurförderfahrzeug (350) ist.

13. System nach einem der Ansprüche 11 und 12, wobei die Funkschnittstelle (410,410') auf RFID-Technologie basiert.

## Claims

1. Apparatus (100, 200, 200', 200") which is allocated in a spatially close manner to a chargeable battery (110) for industrial trucks, comprising:
- storage means (210) in which an identifier allocated to the battery (110) is stored,
- a wireless interface (220) which cooperates with the storage means (210), the wireless interface (220) being configured for bidirectional data transmission between the storage means (110) and an external communication apparatus (300, 300'), **characterised in that** the apparatus (100, 200, 200', 200'') is configured to receive further data via the wireless interface (220) and to store said data in the storage means (210), and these further data comprise non-battery-based mailbox information, the apparatus (100, 200, 200', 200") being placed in a coding pin (140) of a plug (130) of a charging cable (120) of the associated battery (110).

2. Apparatus according to Claim 1, **characterised in that** the wireless interface (220) is further configured to supply energy to the apparatus based on inductive energy transmission from the external communication apparatus (300, 300').

3. Apparatus according to any one of the preceding claims, **characterised in that** the wireless interface (220) comprises at least one antenna (250) and signal processing means.

4. Apparatus according to any one of the preceding claims, **characterised in that** battery data can be stored in the storage means (210), and these battery data comprise at least one item of information from the following items of information:
- nominal voltage;
- nominal capacity;
- number of plates;
- manufacturer;
- year of manufacture.

5. Apparatus according to any one of the preceding claims, **characterised in that** the further data comprise at least one item of information from the following items of information:
- service information;
- charging information.

6. Apparatus according to any one of the preceding claims, **characterised in that** it comprises a control logic (230) which is connected to the storage means (210) and to the wireless interface (220).

7. Apparatus according to Claim 6, **characterised in that** the control logic (230) is configured to save data, received via the wireless interface (220), in the storage means (210).

8. Apparatus according to Claim 6 or 7, **characterised in that** the control logic (230) is configured to read out data from the storage means (210) and to send out the data via the wireless interface (220).

9. Apparatus according to any one of the preceding claims, **characterised in that** the wireless interface (220) is based on RFID technology.

10. Apparatus according to any one of the preceding claims, **characterised in that** the apparatus (100, 200, 200', 200") is an RFID transponder.

11. System for communication between two communication Apparatuses, comprising:
- a first apparatus (100, 200, 200', 200'') according to any one of Claims 1 to 10;
- a second apparatus (300, 300'') which is allocated in a spatially close manner to an apparatus (310, 250) which can be connected to a battery (110) for industrial trucks, the second apparatus (300, 300'') comprising:
- a processor unit (420);
- a wireless interface (410, 410') which is connected to the processor unit (420), wherein the wireless interface (410, 410') is configured for bidirectional data transmission with an external communication apparatus (100, 200, 200', 200''), and wherein this data transmission comprises receiving an identifier allocated to a battery (110), wherein the processor unit (420) is further configured to send data via the
wireless interface (410, 410') to the external communication apparatus (100, 200, 200', 200") for the storage of the data in the external communication Apparatus (100, 200, 200', 200'') and/or to receive data from the external communication apparatus via the wireless interface (410, 410') and wherein the sent data and/or received data comprise non-battery-based mailbox information.

12. System according to Claim 11, wherein the apparatus (310, 350) which can be connected to a battery for industrial trucks is a charging apparatus (310) for charging batteries for industrial trucks or an industrial truck (350) which can be operated by batteries.

13. System according to either of Claims 11 and 12, wherein the wireless interface (410, 410') is based on RFID technology.

## Revendications

1. Dispositif (100, 200, 200', 200''), associé à une batterie (110) rechargeable pour véhicules de manutention, à proximité de celle-ci, lequel dispositif comprend :
- des moyens de mémorisation (210), dans lesquels est mémorisé un identificateur, qui est associé à la batterie (110),
- une interface radio (220), qui coopère avec les moyens de mémorisation (210), sachant que l'interface radio (220) est aménagée pour la transmission de données bidirectionnelle entre les moyens de mémorisation (210) et un dispositif de communication externe (300, 300'),
**caractérisé en ce que** le dispositif (100, 200, 200', 200") est aménagé pour recevoir d'autres données par l'intermédiaire de l'interface radio (220) et pour mémoriser celles-ci dans les moyens de mémorisation (210), et sachant que ces autres données comprennent des informations die boîte aux lettres, qui ne se rapportent pas à la batterie, le dispositif (100, 200, 200', 200'') étant placé dans une fiche de codage (140) d'une fiche mâle (130) d'un câble de charge (120) de la batterie (110) afférente.

2. Dispositif selon la revendication 1, **caractérisé en ce que** l'interface radio (220) est, de plus, aménagée pour l'alimentation en énergie du dispositif, sur la base d'un transfert d'énergie inductif du dispositif de communication externe (300, 300').

3. Dispositif selon l'une des revendications précédentes,
**caractérisé en ce que** l'interface radio (220) est dotée d'au moins une antenne (250) et de moyens de traitement de signaux.

4. Dispositif selon l'une des revendications précédentes,
**caractérisé en ce que**, dans les moyens de mémorisation (210), des données relatives à la batterie peuvent être mémorisées, et q u e ces données relatives à la batterie comprennent au moins l'une des informations suivantes, concernant:
- tension nominale,
- capacité nominale,
- nombre de plaques,
- fabricant,
- année de construction.

5. Dispositif selon l'une des revendications précédentes
**caractérisé en ce que** les autres données comprennent au moins l'une des informations suivants:
- informations de service,
- informations de charge.

6. Dispositif selon l'une des revendications précédentes,
**caractérisé en ce que** celui-ci comprend une logique de commande (230) qui est reliée aux moyens de mémorisation (210) et à l'interface radio (220).

7. Dispositif selon la revendication 6,
**caractérisé en ce que** la logique de commande (230) est aménagée pour mémoriser dans les moyens de mémorisation (210) des données reçues par l'intermédiaire de l'interface radio (220).

8. Dispositif selon revendication 6 ou 7,
**caractérisé en ce que** la logique de commande (230) est aménagée pour lire des données en provenance des moyens de mémorisation (210) et pour les envoyer par l'intermédiaire de l'interface radio (220).

9. Dispositif selon l'une des revendications précédentes,
**caractérisé en ce que** l'interface radio (220) est basée sur la technologie RFID.

10. Dispositif selon l'une des revendications précédentes,
**caractérisé en ce que** le dispositif (100, 200, 200', 200'') est un transpondeur RFID.

11. Système de communication entre deux dispositifs de communication, qui comprend :
- un premier dispositif (100, 200, 200', 200'') selon l'une des revendications 1 à 10,
- un deuxième dispositif (300, 300'') qui est associé à un dispositif (310, 250), pouvant être relié à une batterie (110) pour véhicules de manutention, à proximité de celui-ci, sachant que le deuxième dispositif (300, 300'') comprend :
- une unité de processeur (420),
- une interface radio (410, 410'), qui est reliée à l'unité de processeur (420), ledit interface radio (410, 410') étant aménagé pour la transmission de données bidirectionnelle à un dispositif de communication externe (100, 200, 200', 200''), et sachant que cette transmission de données comprend la réception d'un identificateur qui est associé à une batterie (110), l'unité de processeur (420) étant, de plus, aménagée pour envoyer des données au dispositif de communication externe (100, 200, 200', 200''), par l'intermédiaire de l'interface radio (410, 410'), pour que les données soient mémorisées dans le dispositif de communication externe (100, 200, 200', 200''), et pour recevoir, par l'intermédiaire de l'interface radio (410, 410'), des données en provenance du dispositif de communication externe, et sachant que les données envoyées et / ou les données reçues comprennent des informations de boîte aux lettres qui ne se rapportent pas à la batterie.

12. Système selon la revendication 11, sachant que le dispositif (310, 350), qui peut être raccordé à une batterie pour véhicules de manutention, est un appareil de charge (310) de batteries pour véhicules de manutention ou un véhicule de manutention (350) fonctionnant avec des batteries.

13. Système selon l'une des revendications 11 et 12, sachant que l'interface radio (410, 410') est basée sur la technologie RFID.
